# EUROPEAN PATENT SPECIFICATION

(11) **EP 2 181 159 B1**
(45) Date of publication and mention of the grant of the patent: **13.11.2019**
(21) Application number: 08786820.4
(22) Date of filing: 04.08.2008
(51) Int. Cl.: C08L 79/00

(54) **BLENDS OF AROMATIC POLYIMIDES AND AROMATIC SULFONE POLYMERS**
MISCHUNGEN VON AROMATISCHEN POLYIMIDIEN UND AROMATISCHEN SULFONPOLYMEREN
MÉLANGES DE POLYIMIDES AROMATIQUES ET DE POLYMÈRES SULFONIQUES AROMATIQUES

(30) Priority: 09.08.2007 US 954821 P
(43) Date of publication of application: 05.05.2010
(73) Proprietor: Solvay Specialty Polymers USA, LLC., Alpharetta, GA 30005 (US)
(72) Inventor: CHEN, Hong, Alpharetta, Georgia 30005 (US); UNDERWOOD, Geoffrey, Atlanta, Georgia 30319 (US); REICHMANN, Mark, Roswell, Georgia 30075 (US)
(74) Representative: Vande Gucht, Anne
(86) International application number: PCT/EP2008/060207
(87) International publication number: WO 2009/019241

(56) References cited:
- EP-A- 0 376 349
- EP-A- 0 564 299
- US-A- 4 581 264
- US-A- 6 046 285

## Description

### CROSS-REFERENCE TO A RELATED APPLICATION

The present application claims the benefit of U.S. application serial no. 60/954821, filed August 9, 2007.

The present invention relates to blends based on aromatic polyimides and aromatic sulfone polymers. More particularly, the present invention relates to blends comprising aromatic polyimides, aromatic sulfone polymers and an additional constituent selected among aromatic polyetherimides. The invention also relates to a process for the preparation of said blends as well as to articles or parts of articles comprising those blends.

Aromatic polyimides, in particular aromatic polyamide-imide (PAI), form a class of thermoplastic polymers that offer some excellent engineering properties such as, for instance, very high heat resistance, high strength and excellent chemical resistance. They are thus well suitable for a wide variety of applications requiring strength and durability at extremely high temperatures. Nevertheless, in certain demanding industries, the level of properties achieved by aromatic polyimides, like their impact strength and processability, are insufficient.

On the other hand, high performance amorphous thermoplastic polymers such as aromatic sulfone polymers, in particular polyphenylsulfones (PPSU), feature high strength and stiffness at high temperature ; they exhibit outstanding toughness among other polymers of same temperature class ; they possess very good chemical resistance, can be rather easily processed in the melt either for making injection molded articles or for extrusion of films and sheets, have excellent transparency and ease of colorability ; moreover sulfone polymers are inherently flame-resistant materials with low smoke emission. However, in certain demanding industries, the level of properties achieved by aromatic sulfone polymers, like their tensile and compressive strengths, should still be improved.

It has already been proposed to mix certain polyamide-imides and certain polysulfones together with the aim to combine their respective advantageous properties in one sole polymeric blend. Such blends are disclosed for instance in US-A-3658938. In this document, it is stated that the described polyamide/imides and polysulfones are not mutually soluble. This may be a serious drawback, since the multiphase behaviour of the obtained blends may be detrimental to their chemical resistance and to their thermal and optical performances.

US-A-5037902 discloses miscible blends of biphenyl-containing poly(arylsulfones) and isopropylidene-based polyimides. It is mentioned in this document that "imide groups in conjunction with isopropylidene groups ... appear to be necessary as no polyamide or amide-imide not containing an isopropylidene linkage is found to be miscible with a poly(aryl sulfone)". Furthermore, in accordance with the teachings of this document, the biphenyl linkages in the poly(aryl sulfone) and the isopropylidene linkages in the polyamide or amide-imide must be in specific proportions for the blend to be miscible. There are thus several conditions limiting in practice the number of blends miscible according to US-A-5037902.

US-A-4581264 discloses polyamide-imide polymers and copolymers comprising about 0.1 to about 50 percent by weight of polyetherimides and further discloses polyamide-imide polymers and copolymers comprising about 0.1 to about 50 percent by weight of polysulfones.

US-A-6046285 discloses blends of polymers containing sulfoxide groups and high-performance polymers, such as polyesters, polyethersulfones, polysulfones, polyetherimides, polyamidoimides and polyacetals.

EP 0 564 299 A discloses thermoplastic resin compositions comprising one or more thermoplastic resins and one or more liquid crystal type aromatic polyimide.

The present invention aims to overcome these disadvanges by improving the miscibility of these blends based on aromatic polyimides and aromatic sulfone polymers, while, in the same time, improving important properties of each of their constituents.

Accordingly, in its main aspect, the present invention relates to blends (B) comprising :
▪ at least one polyimide (P1), of which more than 50 wt. % of the recurring units (R1) comprise at least one aromatic ring, at least one imide group and 0 to 1 ether group (-O-) ;
▪ at least one aromatic sulfone polymer (P2) ;
▪ at least one polyimide (P3), of which more than 50 wt. % of the recurring units (R3) comprise at least one aromatic ring, at least one imide group and at least two ether groups (-O-).

As mentioned, the blends (B) comprise at least one polyimide (P1), as defined above. The recurring units (R1) of polymer (P1) comprise at least one aromatic ring, at least one imide group and from zero to one ether group (- O -).

The imide groups contained in the recurring units (R1) can be imide groups as such [formula (I)] and/or in their amic acid form [formula (II)] :

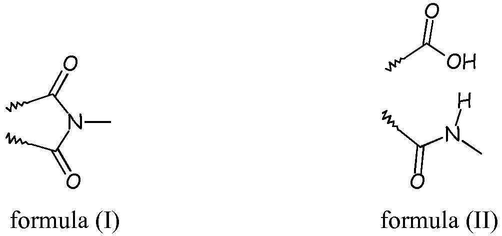

The imide groups, as such and/or in their corresponding amic acid form, are advantageously linked to an aromatic ring, as illustrated below : 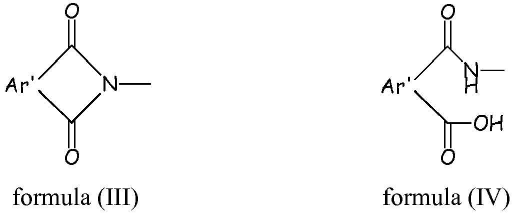 whereas Ar' denotes a moiety containing at least one aromatic ring.

The imide groups are advantageously present as condensed aromatic system, yielding a five- or six-membered heteroaromatic ring, such as, for instance, with benzene [phthalimide-type structure, formula (V)] and naphthalene [naphthalimide-type structure, formula (VI)].

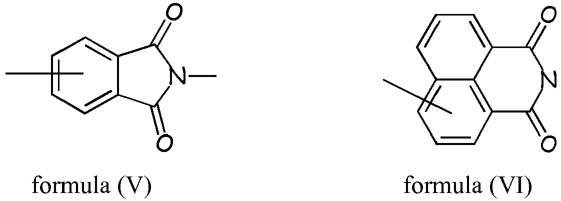

For the purpose of the present description, the definition "ether group (-O-)" should be understood as having the following meaning : "ether groups which links two moieties containing each at least one aromatic ring".

In a first particular embodiment, the recurring units (R1) of the polyimide (P1) are further free from amide groups other than those possibly included in the amic acid form of the imide groups [recurring units (R1a)].

Recurring units (R1a) are preferably of one or more formulae (VII), (VIII) and (IX) here below : 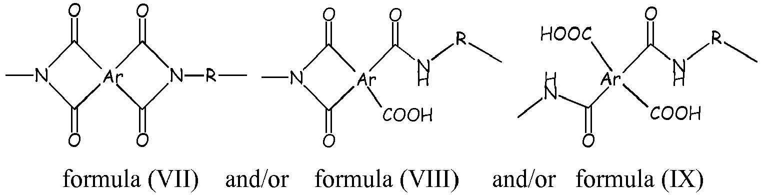 where :
- Ar is : 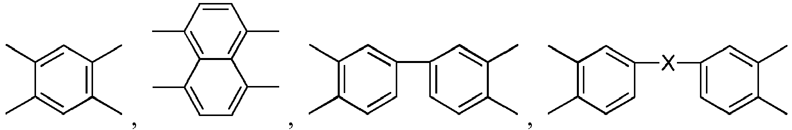 with 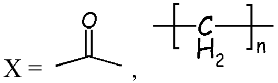 with n= 1,2,3,4 or 5 ;
- R is : 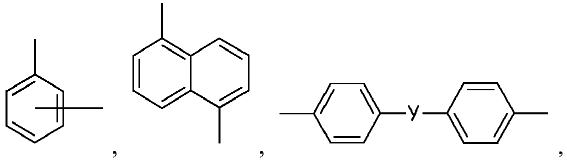 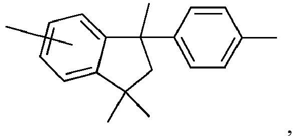 with 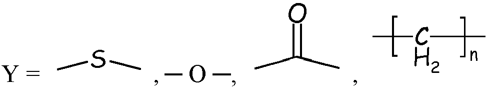 with n= 0,1,2,3,4 or 5.

In a second particular embodiment, the polyimide (P1) is an aromatic polyamide-imide. For the purpose of the present description, an aromatic polyamide-imide is intended to denote any polymer of which more than 50 wt. % of the recurring units (R1) comprise at least one aromatic ring, at least one imide group, as such and/or in its amic acid form, and at least one amide group which is not included in the amic acid form of an imide group [recurring units (R1b)].

The recurring units (R1b) are preferably : 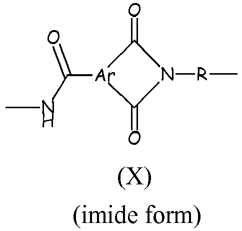 and/or 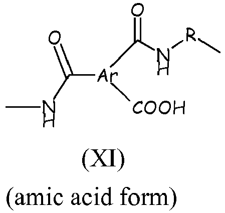 where :
- Ar is : 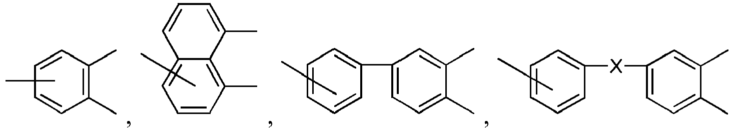 with X being, in this particular embodiment, 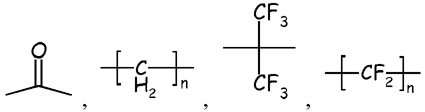 with n= 1,2,3,4 or 5 ;
- R is : 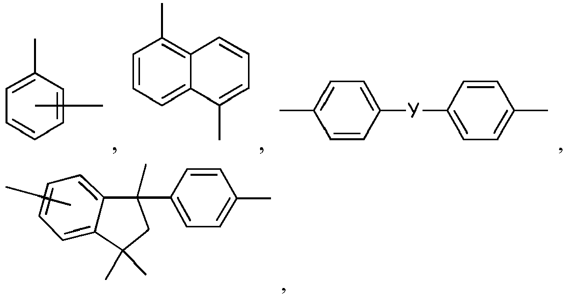 with Y being, in this particular embodiment: 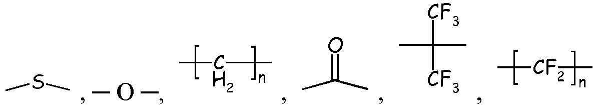 with n= 0,1,2,3,4 or 5.

More preferably, recurring units (R1b) are chosen from : 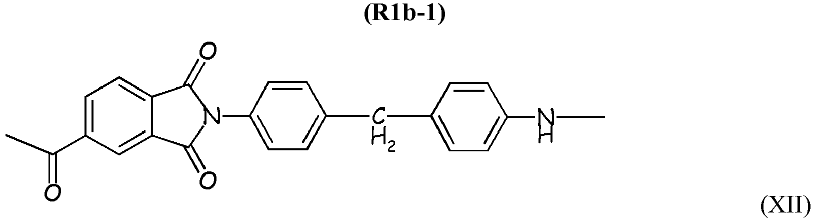 and/or the corresponding amide-amic acid containing recurring unit: 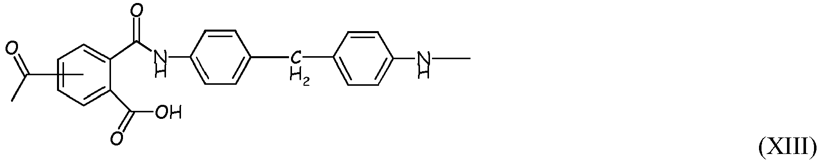 wherein the attachment of the two amide groups to the aromatic ring as shown in (XIII) will be understood to represent the 1,3 and the 1,4 polyamide-amic acid configurations ; 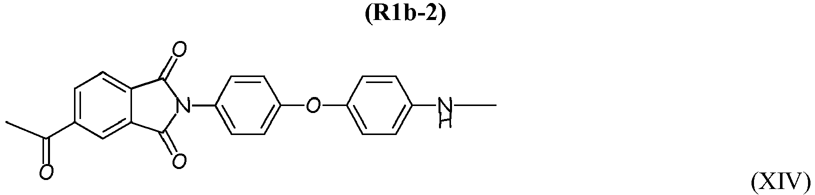 and/or the corresponding amide-amic acid containing recurring unit: 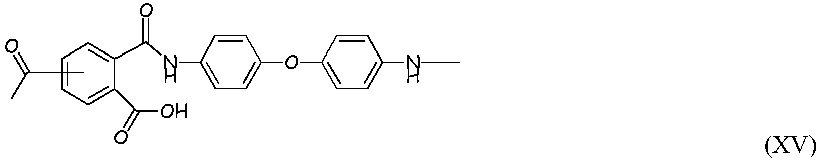 wherein the attachment of the two amide groups to the aromatic ring as shown in (XV) will be understood to represent the 1,3 and the 1,4 polyamide-amic acid configurations ; and 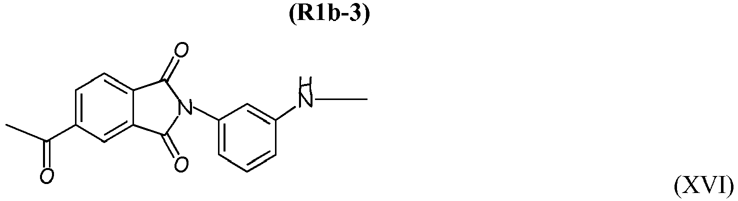 and/or the corresponding amide-amic acid containing recurring unit: 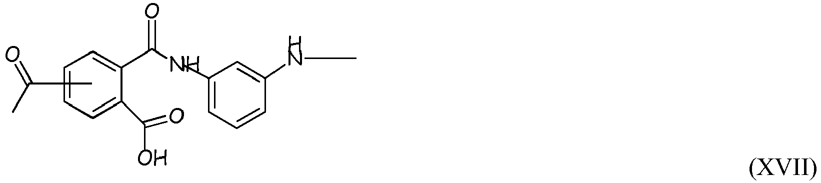 wherein the attachment of the two amide groups to the aromatic ring as shown in (XVII) will be understood to represent the 1,3 and the 1,4 polyamide-amic acid configurations.

Recurring units (R1b) are preferably a mix of recurring units (R1b-2) and (R1b-3). Polyamide-imides where essentially all, if not all, recurring units are recurring units complying with this criterion are commercialized by SOLVAY ADVANCED POLYMERS, L.L.C. as TORLON® polyamide-imides.

The aromatic polyamide-imide can be notably manufactured by a process including the polycondensation reaction between (i) at least one acid monomer chosen from trimellitic anhydride and trimellitic anhydride monoacid halides and (ii) at least one comonomer chosen from diamines and diisocyanates.

Among the trimellitic anhydride monoacid halides, trimellitic anhydride monoacid chloride is preferred.

The comonomer comprises preferably at least one aromatic ring. Besides, it comprises preferably at most two aromatic rings. More preferably, the comonomer is a diamine. Still more preferably, the diamine is chosen from the group consisting of 4,4'-diaminodiphenylmethane, 4,4'-diaminodiphenylether, m-phenylenediamine and mixtures thereof.

As mentioned above, the blends (B) in accordance with the present invention further comprise at least one aromatic sulfone polymer (P2).

For the purpose of the present description, the definition "aromatic sulfone polymer" is intended to denote any polymer of which more than 50 wt % of recurring units (R2) comprise at least one group of formula XVIII : 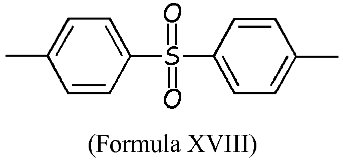 said recurring units (R2) being free of imide groups, as such and/or in their amic acid form, as defined above in connection with the definition of polymer (P1).

The aromatic sulfone polymer (P2) preferably contains more than 70 % wt of recurring units (R2), more preferably contains more than 90 % wt of recurring units (R2). Most preferably, it contains no recurring unit other than recurring units (R2).

In a particular embodiment, which is preferred, more than 50 % wt of the recurring units (R2) of aromatic sulfone polymer (P2) are recurring units (R2a) and/or recurring units (R2b) : 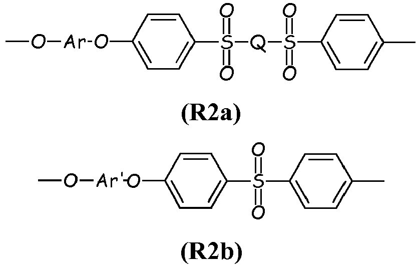 wherein :
- **Q** is a group chosen among the following structures : 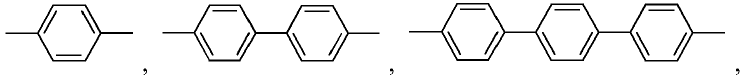 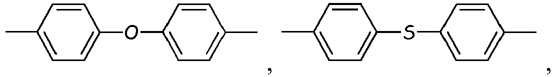 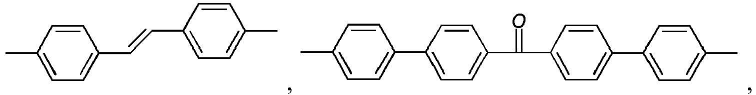 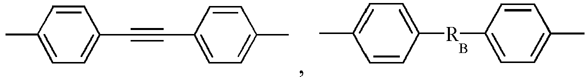 with **R_{B}** being : 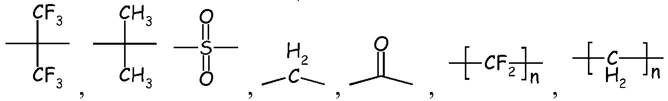 with n = integer from 1 to 6, or an aliphatic divalent group, linear or branched, of up to 6 carbon atoms ;
   and mixtures thereof;
- **Ar** being, for the purpose of the definition of polymer (P2) a group chosen among the following structures : 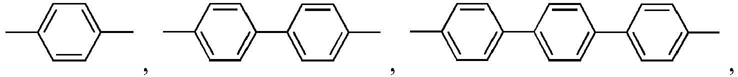 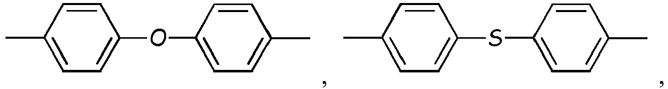 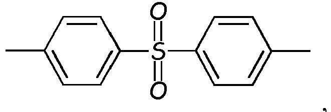 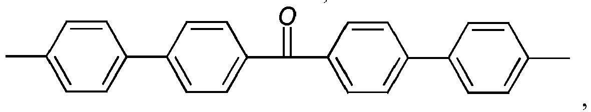 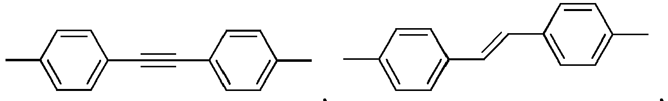 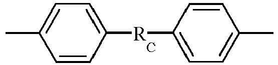 with **R_{C}** being : 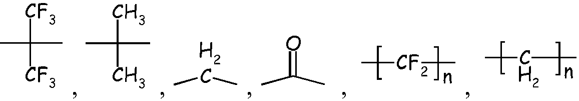 with n = integer from 1 to 6, or an aliphatic divalent group, linear or branched, of up to 6 carbon atoms ;
   and mixtures thereof;
- **Ar'** being, for the purpose of the definition of polymer (P2), a group chosen among the following structures : 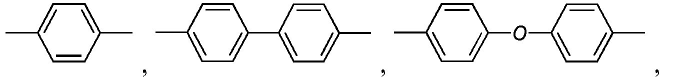 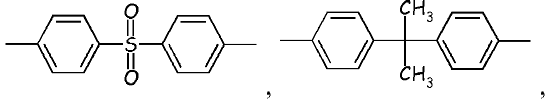 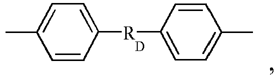 with **R_{D}** being : 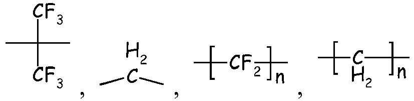 with n = integer from 1 to 6, or an aliphatic divalent group, linear or branched, of up to 6 carbon atoms ;
   and mixtures thereof.

Recurring units **(R2a)** are preferably chosen from : 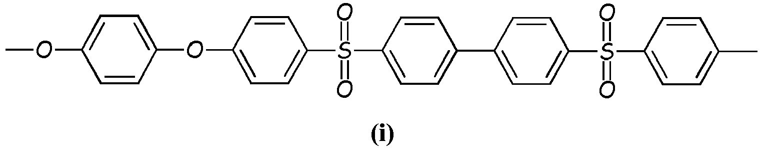 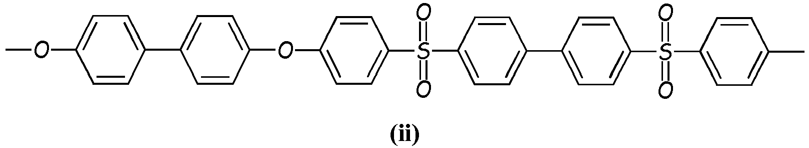 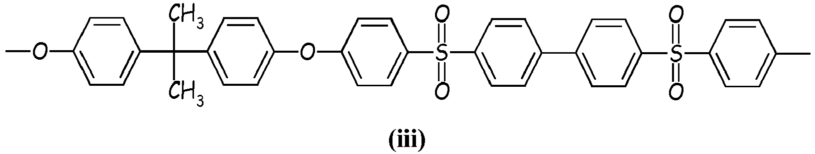 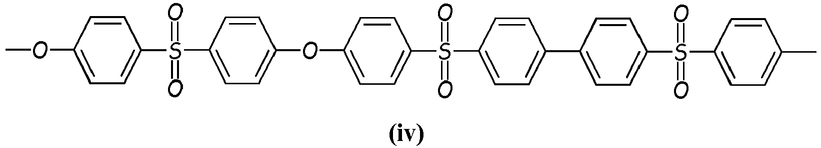 and mixtures thereof.

Recurring units **(R2b)** are preferably chosen from : 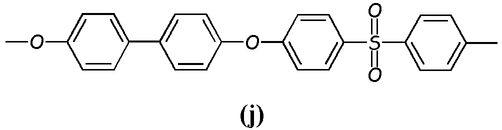 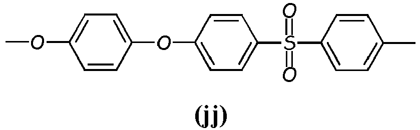 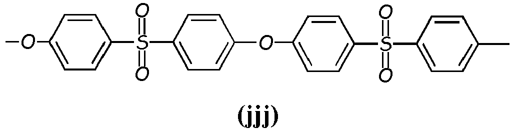 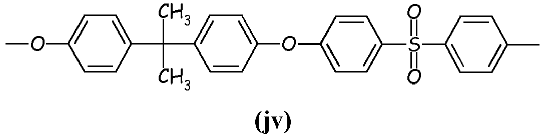 and mixtures thereof.

More preferably, recurring units (R2b) are units (j) as above detailed.

Still more preferably, according to the preferred embodiment, aromatic sulfone polymer (P2) contains no recurring unit other than recurring units (R2a) and/or (R2b).

Good results were obtained with :
▪ aromatic sulfone polymer (P2), the recurring units of which are recurring units (ii) (poly(biphenyldisulfone)) ;
▪ aromatic sulfone polymer (P2), the recurring units of which are recurring units (j) (poly(phenylsulfone)) ;
▪ aromatic sulfone polymer (P2), the recurring units of which are recurring units (jj) (poly(etherethersulfone)) ;
▪ aromatic sulfone polymer (P2), the recurring units of which are recurring units (jjj) and, optionally in addition, recurring units (jj) (polyethersulfone) ; and
▪ aromatic sulfone polymer (P2) the recurring units of which are recurring units (jv) (polysulfone, hereinafter).

Most preferably, according to the preferred embodiment, aromatic sulfone polymer (P2) contains no recurring unit other than recurring units (R2b).

Accordingly, aromatic sulfone polymer (P2) is most preferably chosen among the group consisting of polysulfone, polyphenylsulfone, polyethersulfone, copolymers and mixtures thereof and is most preferably a polyphenylsulfone, i.e. a polymer whereof the recurring units are units (j) as above detailed.

Polyphenylsulfone is notably available as RADEL® R from SOLVAY ADVANCED POLYMERS, L.L.C.

The aromatic sulfone polymer (P2) may be prepared by any known method. Methods well known in the art are for instance those described in documents US-A-3634355 ; US-A-4008203 ; US-A-4108837 and US-A-4175175

As mentioned above, the blends (B) in accordance with the present invention further comprise at least one polyimide (P3).

For the purpose of the present description, the definition " polyimide (P3) " is intended to denote any polymer of which more than 50 wt. % of the recurring units comprise at least one aromatic ring, at least one imide group, as such and/or in its amic acid form, and at least two ether groups [recurring units (R3)].

Recurring units (R3) may optionally further comprise at least one amide group which is not included in the amic acid form of an imide group.

A first class of polyimides (P3) consists of those wherein the recurring units (R3) are chosen from : 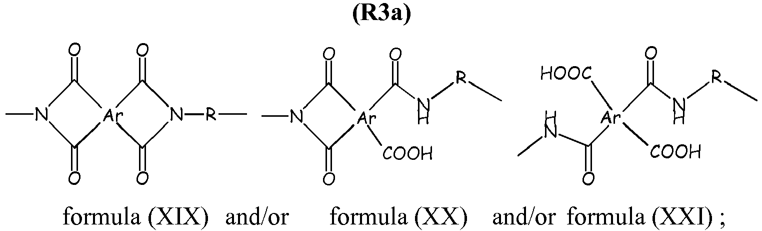 and 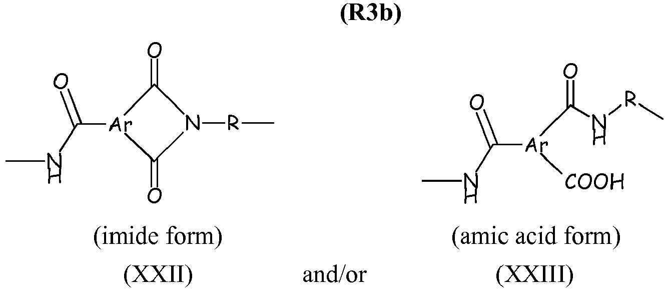 where :
Ar has the same meaning as in formulae (VII - IX) ;
- R being, for the purpose of the definition of polymer (P3) :

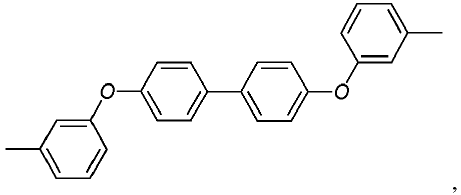

Examples belonging to this first class of polyimides (P3) are those wherein the recurring units (R3) are of formula : 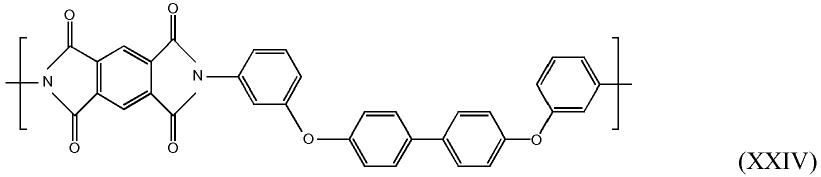 and/or its two corresponding amic acid forms [see formulae (XX) and (XXI) vs. the wholly imide form of formula (XIX)].
Polyimides (P3) wherein essentially all, if not all, the recurring units are of formula (XXIV), and/or their two corresponding amic acid forms, are notably commercially available from MITSUI as AURUM® polyimide.

A second class of polyimides (P3) is composed of those wherein the recurring units (R3) are recurring units (R3c) of formula 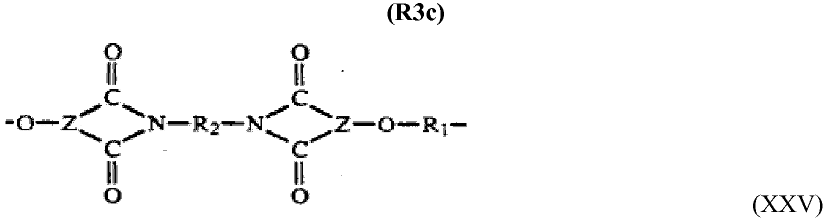 wherein :
(i) -O-Z is a member selected from
   (i-a) 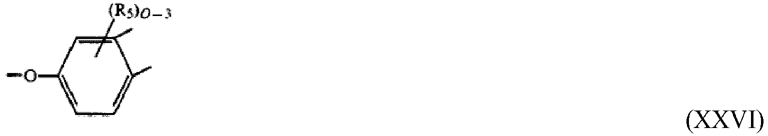 wherein R₅ is independently hydrogen, lower alkyl or lower alkoxy ;
   (i-b) 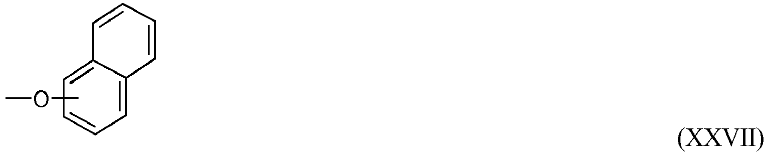 wherein the oxygen may be attached to either ring and located ortho or para to one of the bonds of the imide carbonyl groups
   and (i-c) 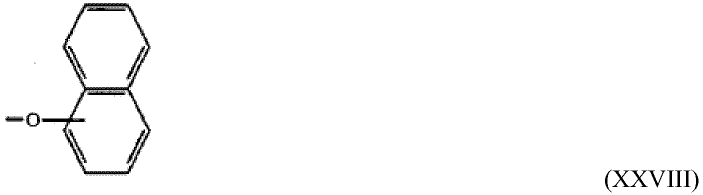 wherein the oxygen may also be attached to either ring and located ortho or para to one of the bonds of the imide carbonyl groups
(ii) R₁ is selected from
   (ii-a) substituted or unsubstituted aromatic radicals such as 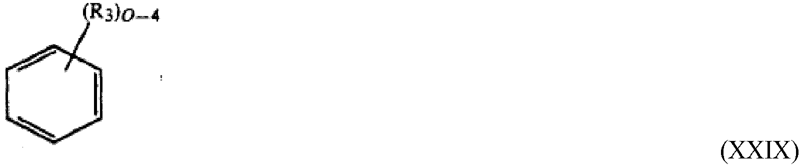 and 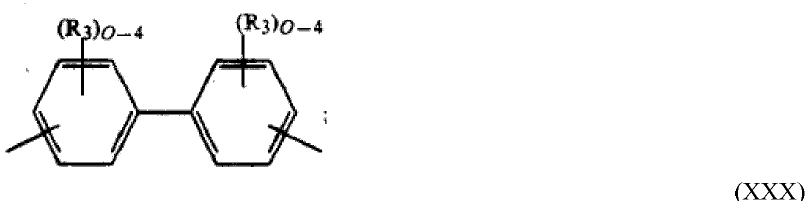
   (ii-b) divalent radicals of the formula : 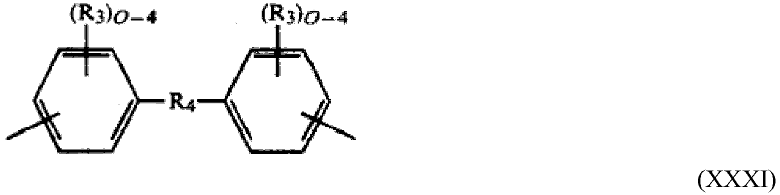 wherein R₃ is independently C1 to C6 alkyl, aryl or halogen and R₄ is selected from -O-, -S-, -SO₂-, -SO-, alkylenes of 1 to 6 carbon atoms, cycloalkylenes of 4 to 8 carbon atoms, alkylidenes of 1 to 6 carbon atoms or cycloalkylidenes of 4 to 8 carbon atoms ;
(iii) R₂ is selected from aromatic hydrocarbon radicals having from 6 to 20 carbon atoms and halogenated derivatives thereof, or alkyl substituted derivatives thereof, wherein the alkyl group contains 1 to 6 carbon atoms, alkylene and cycloalkylene radicals having from 2 to 20 carbon atoms and C2 to C8 alkylene terminated polydiorganosiloxanes or a divalent radical of the formula (XXXI) wherein R₃ and R₄ are as previously defined.

The recurring units (R3c) may be contained in the polyimide (P3) as such and/or in their two amic acid forms.

These polyimides are prepared by methods well known in the art as set forth in, for example, U.S. Pat. Nos. 3,833,544, 3,887,588, 4,017,511, 3,965,125 and 4,024,110.

The polyimides (P3) wherein the recurring units (R3) are recurring units (R3c) may, for example, be prepared by effecting reaction in the presence of a dipolar aprotic solvent of a mixture of ingredients comprising, for instance, (1) a bis(nitrophthalimide) of the general formula : 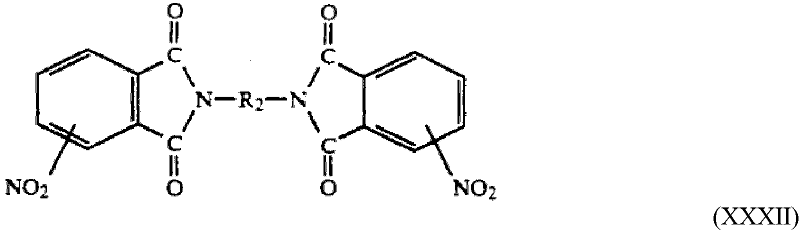 wherein R₂ is defined as hereinabove, and (2) an alkali metal salt of an organic compound of the general formula :

**MO-R₁-OM** (XXXIII)

wherein M is an alkali metal and R₁ is defined as hereinabove.

The diamines are as described infra, when discussing the third class of aromatic polyetherimides.

The preferred nitrophthalic anhydrides useful in the present invention are 3-nitrophthalic anhydride, 4-nitrophthalic anhydride and mixtures thereof.

A third class of polyimides (P3) consists of those wherein the recurring units (R3) are recurring units (R3d) 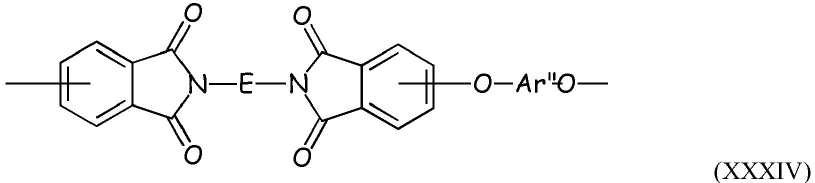 as such, and/or in their amic acid forms 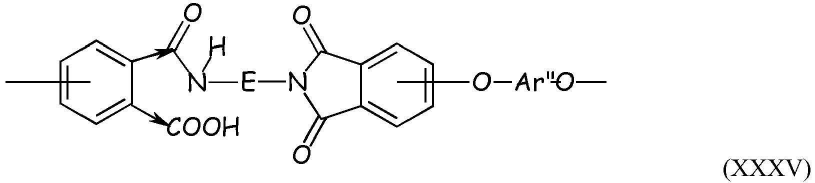 and/or 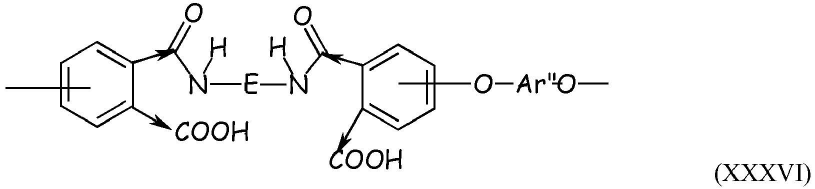 wherein :
- the → denotes isomerism so that in any recurring unit the groups to which the arrows point may exist as shown or in an interchanged position ;
- E is chosen from :
   (E-i) 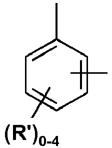 with the **R'** being, for the specific purpose of the definition of polyimide (P3) and independently from each other, alkyl radicals comprising from 1 to 6 carbon atoms, aryls or halogens ;
   (E-ii) 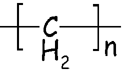 with n = integer from 1 to 6 ;
   (E-iii) 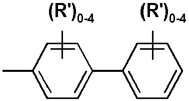 with the **R'** having the same meaning as in (E-i) ;
   (E-iv) 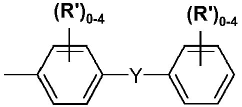 with the **R'** having the same meaning as in (E-i) ; and Y being, for the specific purpose of the definition of polyimide (P3), chosen from :
      (Y-i) alkylenes of 1 to 6 carbon atoms, in particular 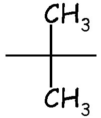 and 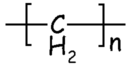 with n = integer from 1 to 6,
      (Y-ii) perfluoroalkylenes of 1 to 6 carbon atoms, in particular 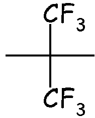 and 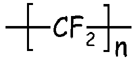 with n = integer from 1 to 6,
      (Y-iii) cycloalkylenes of 4 to 8 carbon atoms ;
      (Y-iv) alkylidenes of 1 to 6 carbon atoms ;
      (Y-v) cycloalkylidenes of 4 to 8 carbon atoms ; 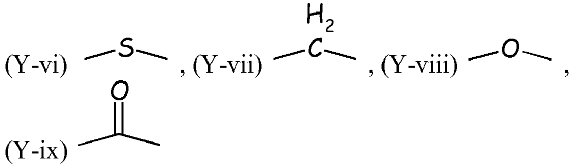
- Ar" is selected from :
   (Ar"-i) aromatic hydrocarbon radicals having from 6 to 20 carbon atoms and halogenated substituted thereof, or alkyl substituted derivatives thereof, wherein the alkyl substituting group contains 1 to 6 carbon atoms, such as : 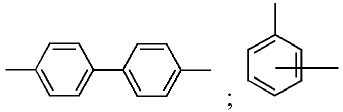 and halogenated substituted thereof, or alkyl substituted derivatives thereof, wherein the alkyl substituting group contains from 1 to 6 carbon atoms ;
   (Ar"-ii) 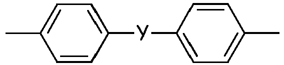 with Y being chosen from (Y-i), (Y-ii), (Y-iii), (Y-iv), (Y-v), (Y-vi), (Y-vii), (Y-viii), and (Y-ix), as above defined,
   (Ar"-iii) alkylene and cycloalkylene radicals having from 2 to 20 carbon atoms, and
   (Ar"-iv) terminated polydiorganosiloxanes.

The polyimides (P3) wherein the recurring units (R3) are recurring units (R3d) may be prepared by any of the methods well-known to those skilled in the art including the reaction of any aromatic bis(ether anhydride)s of the formula 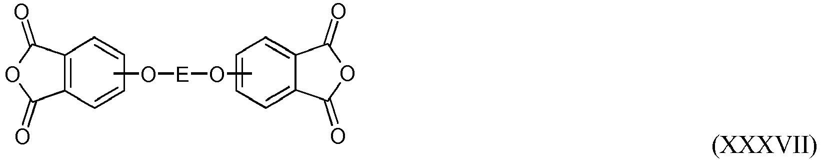 where E is as defined hereinbefore, with a diamino compound of the formula

H₂N-Ar"-NH₂ (XXXVIII)

where Ar" is as defined hereinbefore. In general, the reactions can be advantageously carried out employing well-known solvents, e.g., o-dichlorobenzene, m-cresol/toluene, N,N-dimethylacetamide, etc., in which to effect interaction between the dianhydrides and diamines, at temperatures of from about 20°C to about 250°C.

Alternatively, these polyimides can be prepared by melt polymerization of any dianhydrides of formula (XXXVII) with any diamino compound of formula (XXXVIII) while heating the mixture of the ingredients at elevated temperatures with concurrent intermixing.

The aromatic bis(ether anhydride)s of formula (XXXVII) include, for example :
▪ 2,2-bis[4-(2,3-dicarboxyphenoxy)phenyl]propane dianhydride;
▪ 4,4'-bis(2,3-dicarboxyphenoxy)diphenyl ether dianhydride ;
▪ 1,3-bis(2,3-dicarboxyphenoxy)benzene dianhydride;
▪ 4,4'-bis(2,3-dicarboxyphenoxy)diphenyl sulfide dianhydride ;
▪ 1,4-bis(2,3-dicarboxyphenoxy)benzene dianhydride;
▪ 4,4'-bis(2,3-dicarboxyphenoxy)benzophenone dianhydride ;
▪ 4,4'-bis(2,3-dicarboxyphenoxy)diphenyl sulfone dianhydride ;
▪ 2,2-bis[4(3,4-dicarboxyphenoxy)phenyl]propane dianhydride ;
▪ 4,4'-bis(3,4-dicarboxyphenoxy)diphenyl ether dianhydride ;
▪ 4,4'-bis(3,4-dicarboxyphenoxy)diphenyl sulfide dianhydride ;
▪ 1,3-bis(3,4-dicarboxyphenoxy)benzene dianhydride;
▪ 1,4-bis(3,4-dicarboxyphenoxy)benzene dianhydride ;
▪ 4,4'-bis(3,4-dicarboxyphenoxy)benzophenone dianhydride ;
▪ 4-(2,3-dicarboxyphenoxy)-4'-(3,4-dicarboxyphenoxy)diphenyl-2,2-propane dianhydride ; etc. and mixtures of such dianhydrides.

The organic diamines of formula (XXXVIII) include, for example, m-phenylenediamine, p-phenylenediamine, 2,2-bis(p-aminophenyl)propane, 4,4'-diaminodiphenyl-methane, 4,4'-diaminodiphenyl sulfide, 4,4'-diamino diphenyl sulfone, 4,4'-diaminodiphenyl ether, 1,5-diaminonaphthalene, 3,3'-dimethylbenzidine, 3,3'-dimethoxybenzidine,

In the recurring units (R3d), E is preferably chosen from (E-i) 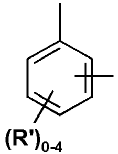 with the **R'** having the same meaning as above ; more preferably, E is unsubstituted m-phenylene.

Besides, in the recurring units (R3d), Ar" is preferably chosen from (Ar"-ii) 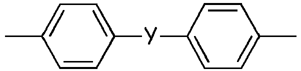 with Y being chosen from (Y-i), (Y-ii), (Y-iii), (Y-iv), (Y-v), (Y-vi), (Y-vii), (Y-viii) and (Y-ix), as above defined.
More preferably, Ar" is

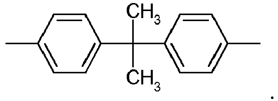

Good results were obtained when the recurring units (R3c-4) were recurring units of formula (XXXIX) as such, in imide form, and/or in amic acid forms [formulae (XL) and (XLI)] : 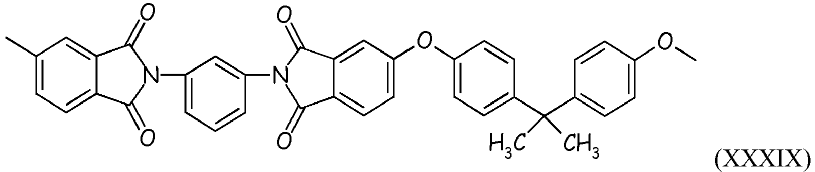 and/or 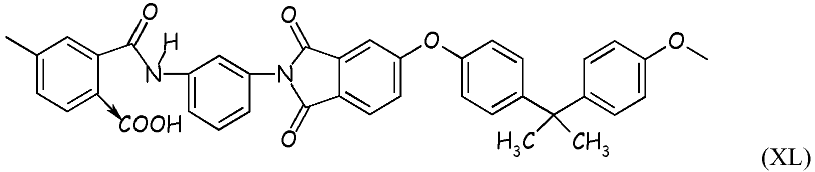 and/or 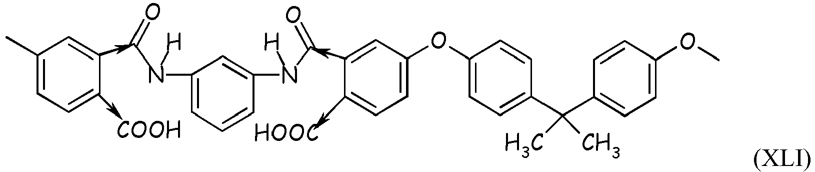 wherein in formulae (XL) and (XLI) the → denotes isomerism so that in any recurring unit the groups to which the arrows point may exist as shown or in an interchanged position.

Among all the polyimides, those belonging to this third and last class are generally preferred.

Preferably more than 75 wt. % and more preferably more than 90 wt. % of the recurring units of the polyimide (P3) are recurring units (R3). Still more preferably, essentially all, if not all, the recurring units of the polyimide (P3) are recurring units (R3).

Excellent results were obtained when the polyimide (P3) was chosen from polyimides of which essentially all, if not all, the recurring units were of formula (XXXIX), and/or their corresponding amic acid forms (XL) and/or (XLI). Such polyimides are notably commercially available from GENERAL ELECTRIC as ULTEM® polyetherimides.

In blends (B) according to the present invention, the weight of the polyimide (P1), based on the total weight of polymers (P1), (P2) and (P3), is generally at least 10 %, preferably at least 30 %, more preferably of at least 50 % and still more preferably of at least 60 %. On the other hand, the weight of the polyimide (P1), based on the total weight of polymers (P1), (P2) and (P3), is generally of at most 97 %, preferably of at most 95 %, more preferably of at most 92,5 % and still more preferably of at most 85 %.

Further, in blends (B) according to the present invention, the weight of the aromatic sulfone polymer (P2), based on the total weight of polymers (P1), (P2) and (P3), is generally at least 2,5 %, preferably at least 5 %, more preferably of at least 8 % and still more preferably of at least 10 %. On the other hand, the weight of the aromatic sulfone polymer (P2), based on the total weight of polymers (P1), (P2) and (P3), is generally of at most 89,5 %, preferably of at most 40 %, more preferably of at most 35 % and still more preferably of at most 30 %.

In the embodiments of the invention wherein the blends (B) are essentially composed of the polymers (P1), (P2) and (P3), the combined weight of the polyimide (P1) and the aromatic sulfone polymer (P2), based on the total weight of blend (B), is generally above 65 %, preferably above 75 %, more preferably above 80 % and still more preferably above 85 %. On the other hand, the combined weight of the polyimide (P1) and the aromatic sulfone polymer (P2), based on the total weight of blend (B), is generally below 98 %, preferably below 95 %, more preferably below 92 % and still more preferably below 90 %. Further, the respective amounts of polyimide (P1) and aromatic sulfone polymer (P2) in blends (B) are not actually critical. They are in a weight ratio (P1) / (P2) generally higher than 1.5 / 1, preferably higher than 2 / 1 and more preferably higher than 5 / 1. On the other hand, the respective amounts of polyimide (P1) and aromatic sulfone polymer (P2) in blends (B) are in a weight ratio (P1) / (P2) generally lower than 15 / 1, preferably lower than 12 / 1 and more preferably lower than 9 / 1.

Without wishing to be bound by any theory whatsoever, Applicants believe that the polyimide (P3), present in the blends (B) of the invention, operates as a compatibilising agent, i.e. appears to enhance the miscibility of the aromatic sulfone polymer (P2) and the polyimide (P1). This is a reason why the amount of polyimide (P3) may be significantly lower than the combined amounts of polymers (P1) and (P2) in said blends (B). Based on the total weight of polymers (P1), (P2) and (P3), the weight of polyimide (P3) is generally of at least 0,5 %, preferably of at least 2 %, more preferably of at least 4 % and still more preferably of at least 5 %. On the other hand, the weight of the polyimide (P3), based on the total weight of polymers (P1), (P2) and (P3), is generally of at most 35 %, preferably of at most 30 %, more preferably of at most 20 % and still more preferably of at most 15 %.

Essentially for reasons of better processability, blending capabilities and properties of the final blends, the inherent viscosity (I.V.) of the polyimide (P1), as measured in N-methylpyrrolidone at concentrations of 0.5 % by weight at 25°C is generally higher than 0.01 dl/g, preferably higher than 0.1 dl/g, more preferably higher than 0.4 dl/g. Further, the I.V. of the polyimide (P1) is generally lower than 1.0 dl/g, preferably lower than 0.9 dl/g, more preferably lower than 0.75 dl/g.

Essentially for similar reasons, the relative melt viscosity of the of the aromatic sulfone polymer (P2), as measured by ASTM test method D 1238 at 380°C under a load of 2.16 kg, and expressed as melt flow rate (MFR), is generally higher than 5 g /10 min, preferably higher than 8 g / 10 min, more preferably higher than 10 g / 10 min. Further, the MFR of the aromatic sulfone polymer (P2) is generally lower than 50 g / 10 min, preferably lower than 40 g / 10 min, more preferably lower than 35 g / 10 min.

Blends (B) in accordance with the invention may comprise one and only one of each of the polyimide (P1) and of the aromatic sulfone polymer (P2). Alternately, they can comprise two, three, or even more than three polyimides (P1), respectively aromatic sulfone polymers (P2).

Blends (B) in accordance with the present invention may further contain conventional ingredients of compositions based on polymers (P1) and / or (P2), including reinforcing agents, lubricating agents, heat stabilizers, processing aids, anti-static agents, extenders, organic and/or inorganic pigments like TiO₂, carbon black, acid scavengers, such as MgO, stabilizers, i.e., metal oxides and sulfides such as zinc oxide and zinc sulfide, antioxidants, flame retardants, smoke-suppressing agents, and particulate fillers and nucleating agents such as talc, mica, titanium dioxide, kaolin and the like. For instance, good results have been noticed by incorporating certain fluorinated polymers, e.g. poly(tetrafluor-ethylene) and the like, as processing aids in blends (B).

The weight of said optional ingredients, based on the total weight of blend (B), ranges generally from 0 to 30 %, preferably from 0 to 20 %, more preferably from 0 to 10 %, still more preferably from 0 to 5 %. The blend (B) may also be substantially free of said optional ingredients

Blends (B) in accordance with the invention may be prepared by any conventional mixing method. A certain method comprises dry mixing the ingredients of the said blends in powder or granular form, using e.g. a mechanical blender, then extruding the mixture into strands and chopping the strands into pellets. A certain other method comprises dissolving the respective polymers (P1), (P2) and (P3) in one or more organic solvents (or dissolving the said polymers in an organic solvent, then causing the dissolved polymers to precipitate by the addition of a non solvent, and finally molding the recovered dried cake.

Still another method to prepare the blends (B), which is preferred and which constitutes another aspect of the present invention comprises :
▪ a step of dry mixing the aromatic sulfone polymer (P2) with the polyimide (P3), both preferably in powder or in granular form ;
▪ a melt mixing step of the polymers dry mixed as above while having separately added thereto the polyimide (P1) in powder or in granular form, alone or together with a processing aid as defined above.

The melt mixing of the polymers (P1), (P2) and (P3) can be achieved by any appropriate means. The melt mixing is advantageously made under a sufficiently high shear, so as to achieve a high degree of mixing of the polymers in the blend (B) ("shear-mixing"). The melt mixing can notably be achieved in a desirable manner by coextruding the polymers (P1), (P2) and (P3) and the possible processing aid, so as to obtained strands of blend (B). Very preferably, the so-obtained strands are then chopped into pellets.

Blends (B) in accordance with the invention exhibit an excellent balance of properties, including :
▪ very high tensile and compressive strengths, unexpectedly higher than those of prior art neat aromatic sulfone polymers ;
▪ very high impact strength, unexpectedly higher than that of prior art neat aromatic polyimides, coupled with an improved processability, compared to the latter.

Surprisingly, the presence of the polyimide (P3) in the blends (B) in accordance with the invention allows to obtain an overall unexpected improvement of their elongation at break and impact strength.

Thanks to their excellent properties, especially their mechanical properties, the blends (B) in accordance with the invention can be shaped in a large variety of articles or parts of articles usable in applications requiring high strength, especially compressive and impact strength, high temperature capability, chemical resistance, etc. Blends (B) may be shaped, for instance, in the form of thermoplastic calendar rollers for the paper industry, where these properties are required, together with another property featured by the said blends, i.e. good adhesive bonding strength with epoxy resins (which are used to bond the thermoplastic part of the rollers to the steel core thereof)

The present invention is described in greater detail below by referring to the non limitative examples.

### Examples 1R, 2R and 3

Examples 1R and 2R are given for the sake of comparison.

Blends containing a polyamideimide homopolymer (P1), commercialised by SOLVAY ADVANCED POLYMERS, L.L.C. under the trade name TORLON® 4000 T, and a polyphenylsulfone homopolymer (P2), commercialised by SOLVAY ADVANCED POLYMERS, L.L.C. under the trade name RADEL® R-5800 T, were compounded, together with a processing aid being a poly(tetrafluorethylene) polymer (PTFE) commercialized by 3M under the trade name DYNEON PA5956, as detailed hereafter.

In example 3, a polyetherimide homopolymer (P3) commercialised by GENERAL ELECTRIC under the trade name ULTEM® A 1000 was added to the blend.

The compositions of the blends are shown in Table 1 hereunder.

**Table 1**

| Example | | 1R | 2R | 3 |
|---|---|---|---|---|
| Polyamideimide | (weight %) | 69 | 79 | 69 |
| Polyphenylsulfone | (weight %) | 30 | 20 | 20 |
| Polytetrafluorethylene | (weight %) | 1 | 1 | 1 |
| Polyetherimide | (weight %) | - | - | 10 |

Powder of the (P1) polymer, preblended with PTFE powder, was fed separately from pellets of the (P2) polymer (preblended with pellets of the (P3) polymer in example 3) to a Berstorff 25 mm co-rotating twin-screw extruder using two gravimetric feeders that were adjusted for each run to achieve the target blend ratio of (P1) to (P2).

The compounding conditions for all the blends are shown in Table 2. The set points on the extruder were the same for all the runs.

**Table 2**

| Compounding Run Parameters Used for Compounding of Blends. | | |
|---|---|---|
| Barrel 1 Temp. | (°C) | 260 |
| Barrel 2 Temp. | (°C) | 315 |
| Barrel 3 Temp. | (°C) | 315 |
| Barrel 4 Temp. | (°C) | 320 |
| Barrel 5 Temp. | (°C) | 330 |
| Barrel 6 Temp. | (°C) | 330 |
| Barrel 7 Temp. | (°C) | 330 |
| Die Temp | (°C) | 330 |
| Screw Speed | (RPM) | 125 |
| Die Pressure | (psi) | 650 - 812 |

Several properties of the polymeric blends were measured, using the test methods as indicated in Table 3 below :

**Table 3**

| Property | (units) | Test Method |
|---|---|---|
| Tensile Strength | (psi) | ASTM D 638 |
| Tensile elongation | (%) | ASTM D 638 |
| Tensile Modulus | (psi) | ASTM D 638 |
| Compressive strength | (psi) | ASTM D 695 |
| Flex Strength | (psi) | ASTM D 790 |
| Flex Modulus | (psi) | ASTM D 790 |
| Notched Izod | (ft-lb/in) | ASTM D 256 |
| Un-notched Izod | (ft-lb/in) | ASTM D 4812 |
| Heat deflection temperature (HDT), annealed | (°C) | ASTM D 648 |
| Glass transition temperature (T_{g}) on pellets | (°C) | DSC* 2 heats |
| Specific gravity | (g / cm³) | ASTM D 792 |
| Bulk Density | (lb / ft³) | - |

| | | |
|---|---|---|
| *DSC : differential scanning calorimetry | | |

The results that were obtained are shown in table 4.

**Table 4**

| | Blend of Example 1R | Blend of Example 2R | Blend of Example 3 |
|---|---|---|---|
| Tensile Strength | 13,100 | 15,200 | 18,000 |
| Elongation at yield | 3.7 | 3.8 | 11 |
| Tensile Modulus | 499,000 | 547,000 | 473,000 |
| Compressive Strength | 39,515 | 38,229 | 38,483 |
| Flex Strength | 21,687 | 22,687 | 22,615 |
| Flex Modulus | 530,623 | 556,833 | 548,033 |
| Notched Izod | 0.62 | 0.71 | 4.84 |
| Unnotched Izod | 13.59 | 12.47 | no break |
| HDT | 266.3 | 275.7 | 268.5 |
| Tg (pellets) | 217.0 | 212.2 | 213.6 |
| | 275.7 | 274.2 | 275.3 |
| Specific Gravity | 1.354 | 1.361 | 1.353 |
| Bulk Density | 51.13 | 52.11 | 51.05 |

The results of Table 4 show that the elongation at yield and impact strength (notched and un-notched Izod) of a ternary blend in accordance with the invention (example 3) are unexpectedly improved vs. binary blends not containing polymer (P3).

Further, some mechanical properties of the blend in accordance with the invention are far better than the corresponding properties of polymer (P1) alone, compounded under the same general conditions, as shown in Table 5 hereunder.

**Table 5**

| | Polymer (P1) TORLON® 4000 T (*) | Blend of Example 3 |
|---|---|---|
| Elongation at yield | 7.5 | 11 |
| Notched Izod | 2.68 | 4.84 |
| Unnotched Izod | 26.40 | no break |

| | | |
|---|---|---|
| (*) containing 1 wt. % PTFE | | |

Still further, some mechanical properties of the blend in accordance with the invention are far better than the corresponding properties of polymer (P2) alone, compounded under the same general conditions, as shown in Table 6 hereunder.

**Table 6**

| | Polymer (P2) RADEL® R-5800 T | Blend of Example 3 |
|---|---|---|
| Tensile Strength | 10,100 | 18,000 |
| Elongation at yield | 7 | 11 |
| Tensile Modulus | 344,000 | 473,000 |
| Compressive Strength | 14,400 | 38,483 |
| Flex Strength | 15,200 | 22,615 |
| Flex Modulus | 350,000 | 548,033 |

## Claims

1. Blend (B) comprising :
▪ at least one polyimide (P1), of which more than 50 wt. % of the recurring units (R1) comprise at least one aromatic ring, at least one imide group and 0 to 1 ether group (-O-) ;
▪ at least one aromatic sulfone polymer (P2) ;
▪ at least one polyimide (P3), of which more than 50 wt. % of the recurring units (R3) comprise at least one aromatic ring, at least one imide group and at least two ether groups (-O-).

2. Blend according to claim 1, **characterized in that** the polyimide (P1) is an aromatic polyamide-imide.

3. Blend according to claim 2, **characterized in that** the aromatic polyamide-imide comprises more than 50 wt. % of recurring units (R1b) which comprise at least one aromatic ring, at least one imide group, as such and/or in its amic acid form, and at least one amide group which is not included in the amic acid form of an imide group, the recurring units (R1b) being : 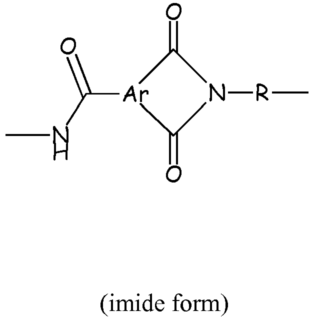 and/or 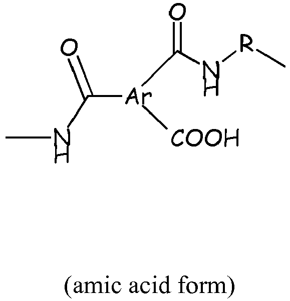 where :
- Ar is : 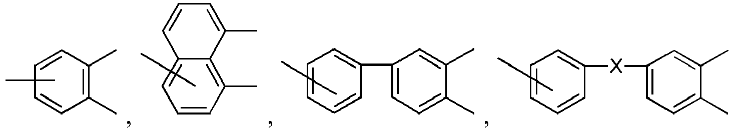 with 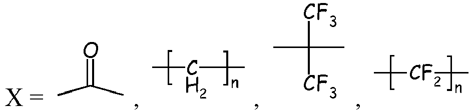 with n= 1,2,3,4 or 5 ;
- R is : 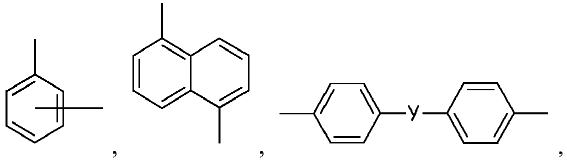 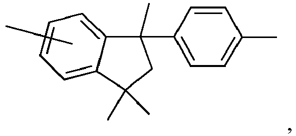 with 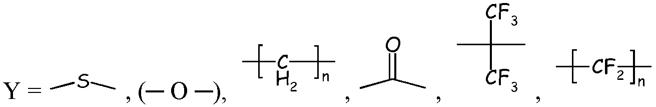 with n = 0,1,2,3,4 or 5.

4. Blend according to anyone of the preceding claims, **characterized in that** the aromatic sulfone polymer (P2) comprises at least 50 % wt of recurring units (R2a) and/or recurring units (R2b), said recurring units (R2a) being chosen from : 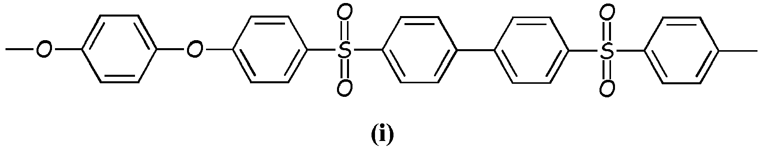 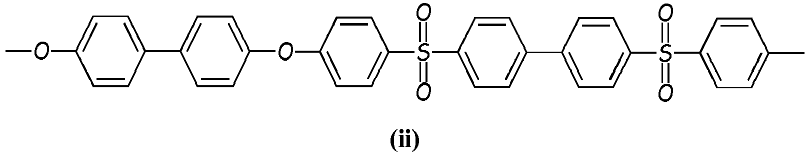 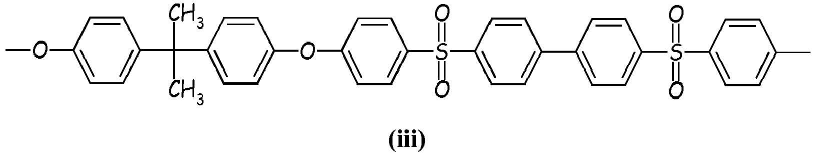 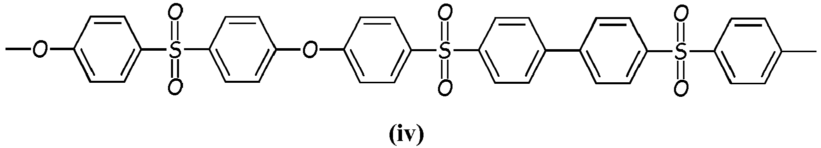 and mixtures thereof and said recurring units (R2b) being chosen from : 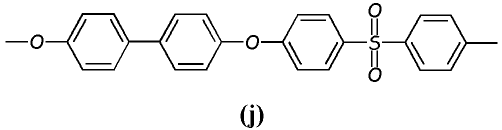 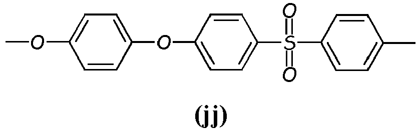 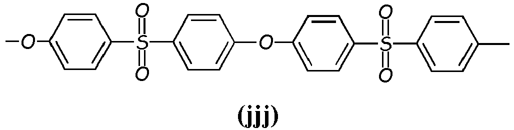 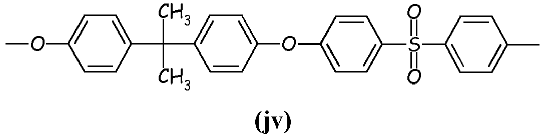 and mixtures thereof.

5. Blend according to claim 4, **characterized in that** the aromatic sulfone polymer (P2) is a polyphenylsulfone, the recurring units thereof being units (j):

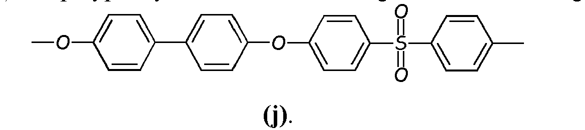

6. Blend according to anyone of the preceding claims, **characterized in that** the polyimide (P3) comprises more than 50 wt. % of recurring units (R3) containing one aromatic ring, at least one imide group, as such and/or in its amic acid form, and at least two ether groups, said recurring units (R3) being chosen from : 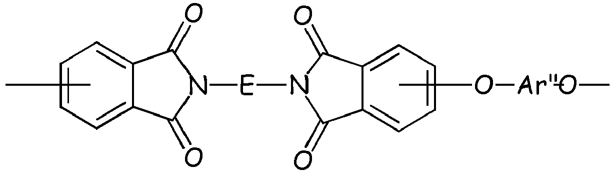 as such, and/or in their amic acid forms 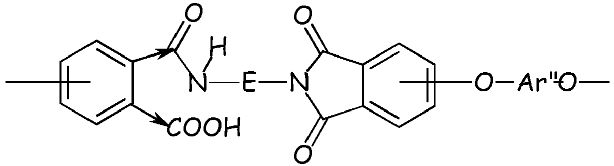 and/or 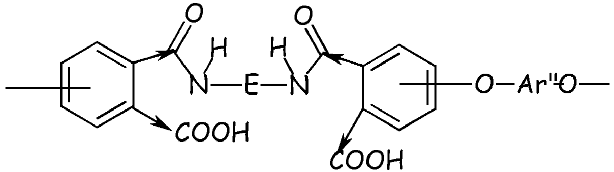 wherein :
▪ the → denotes isomerism so that in any recurring unit the groups to which the arrows point may exist as shown or in an interchanged position ;
▪ E is chosen from :
(E-i) 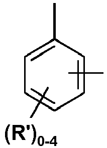 with the **R'** being, independently from each other, alkyl radicals comprising from 1 to 6 carbon atoms, aryls or halogens ;
(E-ii) 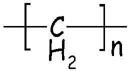 with n = integer from 1 to 6 ;
(E-iii) 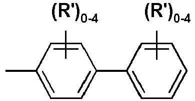 with the **R'** having the same meaning as in (E-i) ;
(E-iv) 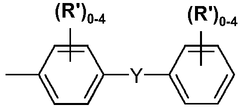 with the **R'** having the same meaning as in (E-i) ;
and **Y** being chosen from :
(Y-i) alkylenes of 1 to 6 carbon atoms, in particular 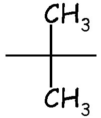 and 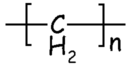 with n = integer from 1 to 6,
(Y-ii) perfluoroalkylenes of 1 to 6 carbon atoms, in particular 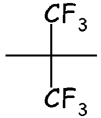 and 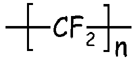 with n = integer from 1 to 6,
(Y-iii) cycloalkylenes of 4 to 8 carbon atoms ;
(Y-iv) alkylidenes of 1 to 6 carbon atoms ;
(Y-v) cycloalkylidenes of 4 to 8 carbon atoms ; 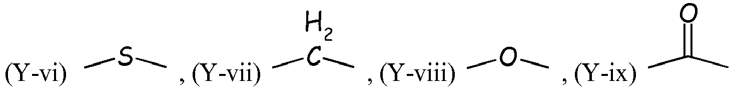
- Ar" is selected from :
(Ar"-i) aromatic hydrocarbon radicals having from 6 to 20 carbon atoms and halogenated substituted thereof, or alkyl substituted derivatives thereof, wherein the alkyl substituting group contains 1 to 6 carbon atoms, such as : 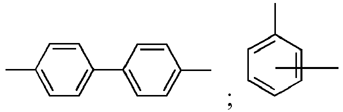 and halogenated substituted thereof, or alkyl substituted derivatives thereof, wherein the alkyl substituting group contains from 1 to 6 carbon atoms ;
(Ar"-ii) 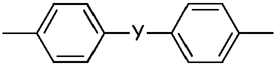 with Y being chosen from (Y-i), (Y-ii), (Y-iii), (Y-iv), (Y-v), (Y-vi), (Y-vii), (Y-viii) and (Y-ix), as above defined,
(Ar"-iii) alkylene and cycloalkylene radicals having from 2 to 20 carbon atoms, and
(Ar"-iv) terminated polydiorganosiloxanes.

7. Blend according to claim 6, **characterized in that** the aromatic polyetherimide (P3), the recurring units thereof being recurring units : 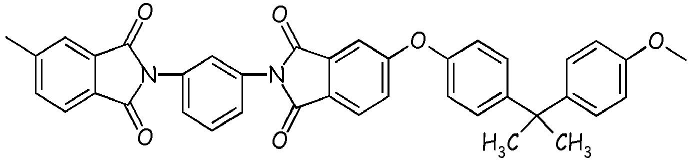 and/or in imide form : 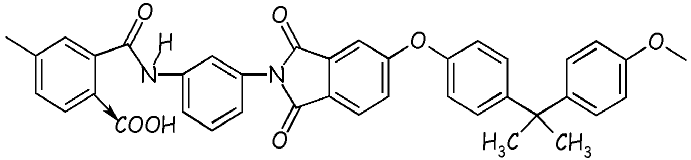 and/or in amic acid form :

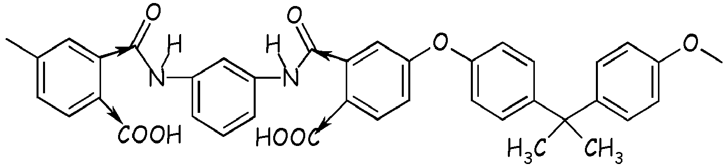

8. Blend according to anyone of the preceding claims, **characterized in that** the weight of the polyimide (P1), based on the total weight of polymers (P1), (P2) and (P3), is at least 40 % and at most 95 %.

9. Blend according to anyone of the preceding claims, **characterized in that** the weight of the aromatic sulfone polymer (P2), based on the total weight of polymers (P1), (P2) and (P3), is at least 5 % and at most 40 %.

10. Blend according to anyone of the preceding claims, **characterized in that** they are essentially composed of the polymers (P1), (P2) and (P3), the combined weight of the polyimide (P1) and the aromatic sulfone polymer (P2), based on the total weight of blend (B), being above 75 % and below 95 %.

11. Blend according to anyone of the preceding claims, **characterized in that** the respective amounts of polyimide (P1) and aromatic sulfone polymer (P2) are in a weight ratio (P1) / (P2) higher than 1.5 / 1 and lower than 15 / 1.

12. Blend according to anyone of the preceding claims, **characterized in that**, based on the total weight of polymers (P1), (P2) and (P3), the weight of polyimide (P3) is of at least 2 % and of at most 23 %.

13. Method for preparing the blend (B) according to anyone of the preceding claims, which comprises :
▪ a step of dry mixing an aromatic sulfone polymer (P2) with a polyimide (P3) ;
▪ a melt mixing step of the polymers mixed as above while having separately added thereto the polyimide (P1), alone or together with a processing aid.

## Patentansprüche

1. Blend (B), umfassend:
▪ mindestens ein Polyimid (P1), wobei mehr als 50 Gew.-% der Wiederholungseinheiten (R1) mindestens einen aromatischen Ring, mindestens eine Imidgruppe und 0 bis 1 Ethergruppe (-O-) umfassen;
▪ mindestens ein aromatisches Sulfonpolymer (P2);
▪ mindestens ein Polyimid (P3), wobei mehr als 50 Gew.-% der Wiederholungseinheiten (R3) mindestens einen aromatischen Ring, mindestens eine Imidgruppe und mindestens zwei Ethergruppen (-O-) umfassen.

2. Blend nach Anspruch 1, **dadurch gekennzeichnet, dass** es sich bei dem Polyimid (P1) um ein aromatisches Polyamidimid handelt.

3. Blend nach Anspruch 2, **dadurch gekennzeichnet, dass** das aromatische Polyamidimid mehr als 50 Gew.-% Wiederholungseinheiten (R1b), die mindestens einen aromatischen Ring, mindestens eine Imidgruppe als solche und/oder in ihrer Amidsäure-Form, und mindestens eine Amidgruppe, die nicht in der Amidsäure-Form einer Imidgruppe enthalten ist, umfassen, umfasst, wobei es sich bei den Wiederholungseinheiten (R1b) um 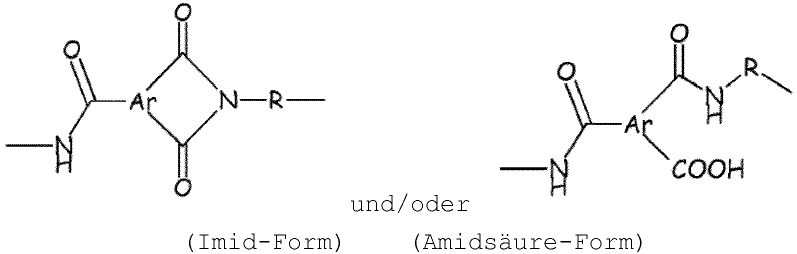 handelt, wobei:
- Ar für 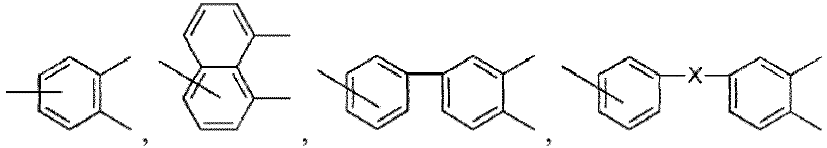 mit 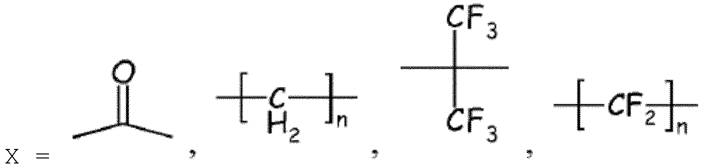 mit n = 1, 2, 3, 4 oder 5 steht;
- R für 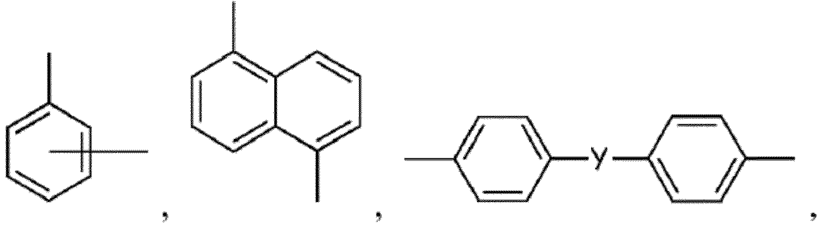 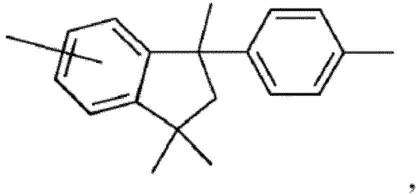 mit Y = 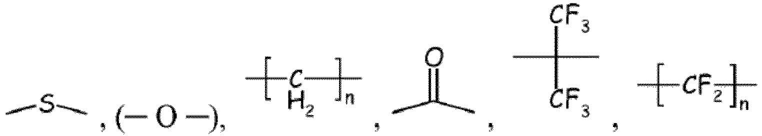 mit n = 0, 1, 2, 3, 4 oder 5 steht.

4. Blend nach einem der vorhergehenden Ansprüche, **dadurch gekennzeichnet, dass** das aromatische Sulfonpolymer (P2) mindestens 50 Gew.-% Wiederholungseinheiten (R2a) und/oder Wiederholungseinheiten (R2b) umfasst, wobei die Wiederholungseinheiten (R2a) aus 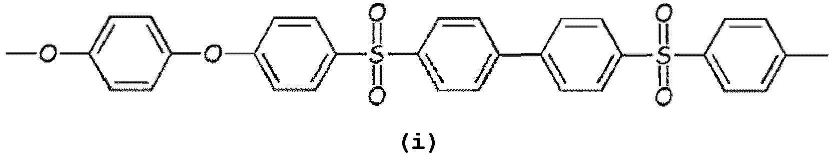 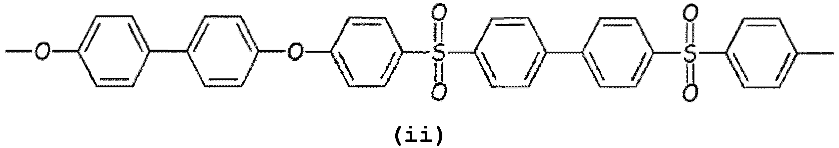 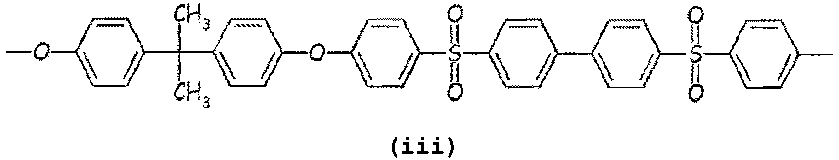 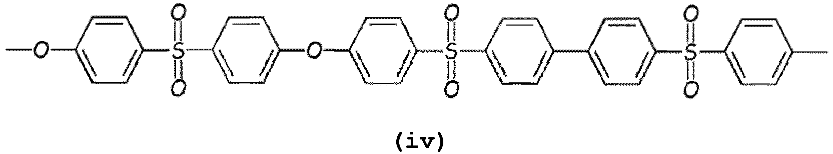 und Mischungen davon ausgewählt sind und die Wiederholungseinheiten (R2b) aus 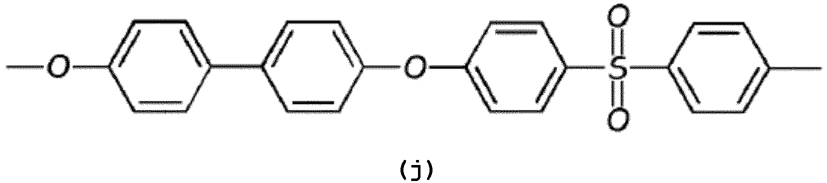 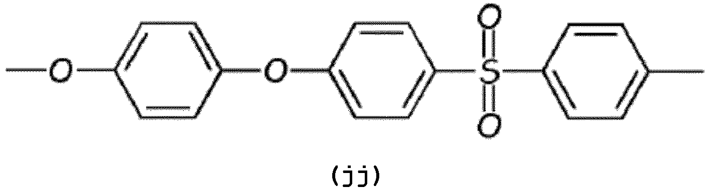 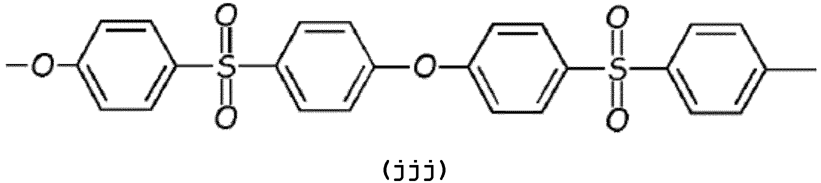 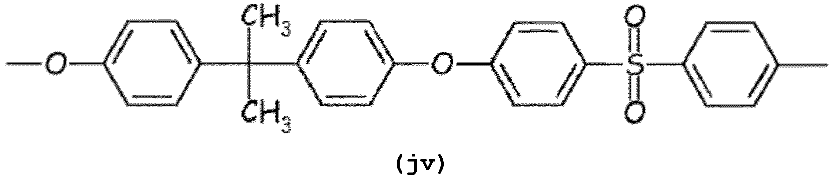 und Mischungen davon ausgewählt sind.

5. Blend nach Anspruch 4, **dadurch gekennzeichnet, dass** es sich bei dem aromatischen Sulfonpolymer (P2) um ein Polyphenylsulfon handelt, wobei es sich bei dessen Wiederholungseinheiten um Einheiten (j) 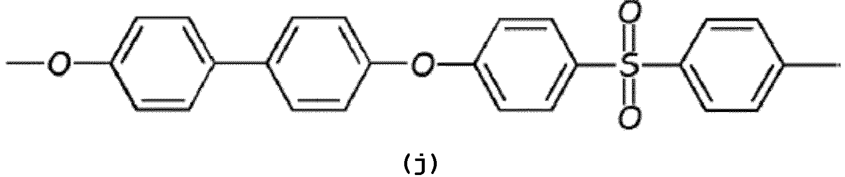 handelt.

6. Blend nach einem der vorhergehenden Ansprüche, **dadurch gekennzeichnet, dass** das Polyimid (P3) mehr als 50 Gew.-% Wiederholungseinheiten (R3), die einen aromatischen Ring, mindestens eine Imidgruppe als solche und/oder in ihrer Amidsäure-Form und mindestens zwei Ethergruppen enthalten, umfasst, wobei die Wiederholungseinheiten (R3) aus 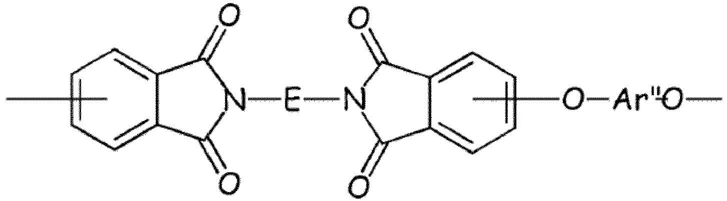 als solchen und/oder in ihrer Amidsäure-Form 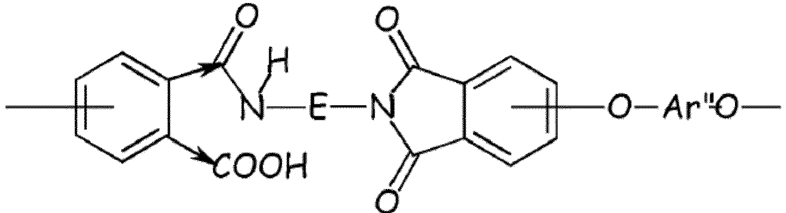 und/oder 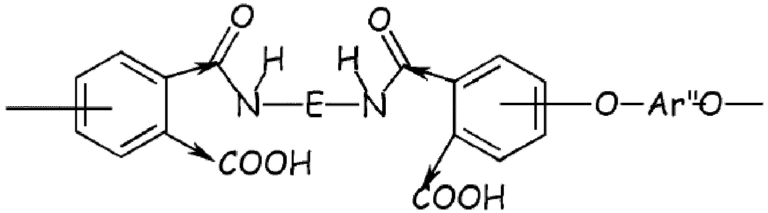 ausgewählt sind, wobei:
▪ der → Isomerie anzeigt, so dass in jeder Wiederholungseinheit die Gruppen, auf die die Pfeile zeigen, wie gezeigt oder in einer ausgetauschten Position existieren können;
▪ E aus
(E-i) 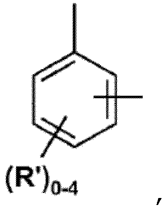 wobei das **R'** unabhängig voneinander für Alkylreste mit 1 bis 6 Kohlenstoffatomen, Arylgruppen oder Halogene steht;
(E-ii) 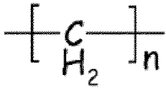 mit n = ganze Zahl von 1 bis 6;
(E-iii) 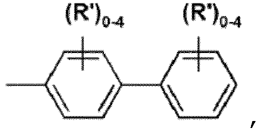 wobei das **R'** die gleiche Bedeutung wie in (E-i) aufweist;
(E-v) 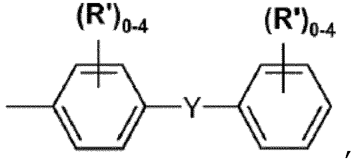 wobei das **R'** die gleiche Bedeutung wie in (E-i) aufweist; ausgewählt ist und **Y** aus
(Y-i) Alkylenen mit 1 bis 6 Kohlenstoffatomen, insbesondere 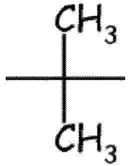 und 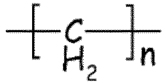 mit n = ganze Zahl von 1 bis 6,
(Y-ii) Perfluoralkylenen mit 1 bis 6 Kohlenstoffatomen, insbesondere 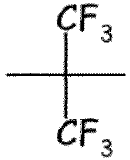 und 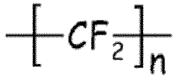 mit n = ganze Zahl von 1 bis 6,
(Y-iii) Cycloalkylenen mit 4 bis 8 Kohlenstoffatomen;
(Y-iv) Alkylidenen mit 1 bis 6 Kohlenstoffatomen;
(Y-v) Cycloalkylidenen mit 4 bis 8 Kohlenstoffatomen; 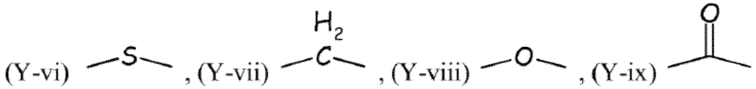 ausgewählt ist;
- Ar" aus
(Ar"-i) aromatischen Kohlenwasserstoffresten mit 6 bis 20 Kohlenstoffatomen und halogensubstituierten Derivaten davon oder alkylsubstituierten Derivaten davon, wobei die Alkylsubstitutionsgruppe 1 bis 6 Kohlenstoffatome enthält, wie: 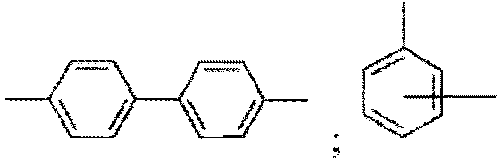 und halogensubstituierten Derivaten davon oder alkylsubstituierten Derivaten davon, wobei die Alkylsubstitutionsgruppe 1 bis 6 Kohlenstoffatome enthält,
(Ar"-ii) 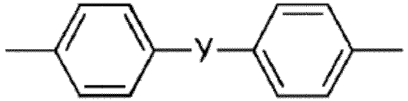 wobei Y aus (Y-i), (Y-ii), (Y-iii), (Y-iv), (Y-v), (Y-vi), (Y-vii), (Y-viii) und (Y-ix) gemäß obiger Definition ausgewählt ist,
(Ar"-iii) Alkylen- und Cycloalkylenresten mit 2 bis 20 Kohlenstoffatomen und
(Ar"-iv) terminierten Polydiorganosiloxanen ausgewählt ist.

7. Blend nach Anspruch 6, **dadurch gekennzeichnet, dass** es sich in dem aromatischen Polyimid (P3) bei dessen Wiederholungseinheiten um Wiederholungseinheiten: 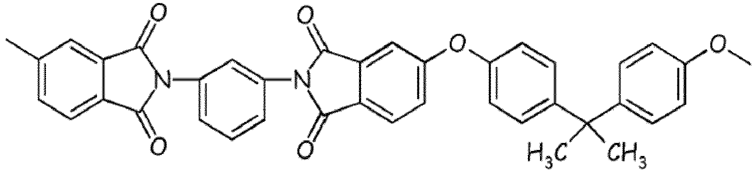 und/oder in Imid-Form: 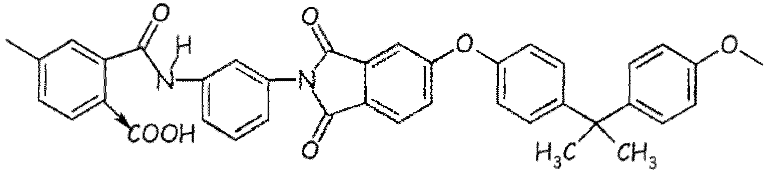 und/oder in Amidsäure-Form: 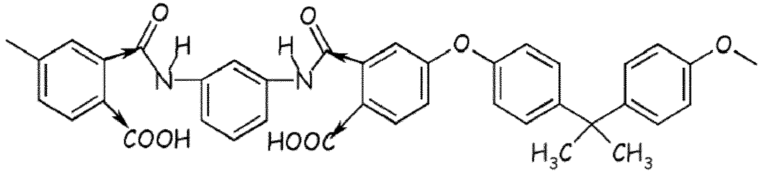 handelt.

8. Blend nach einem der vorhergehenden Ansprüche, **dadurch gekennzeichnet, dass** das Gewicht des Polyamids (P1), bezogen auf das Gesamtgewicht der Polymere (P1), (P2) und (P3), mindestens 40 % und höchstens 95 % beträgt.

9. Blend nach einem der vorhergehenden Ansprüche, **dadurch gekennzeichnet, dass** das Gewicht des Polyamids (P2), bezogen auf das Gesamtgewicht der Polymere (P1), (P2) und (P3), mindestens 5 % und höchstens 40 % beträgt.

10. Blend nach einem der vorhergehenden Ansprüche, **dadurch gekennzeichnet, dass** es im Wesentlichen aus den Polymeren (P1), (P2) und (P3) besteht, wobei das kombinierte Gewicht des Polyimids (P1) und des aromatischen Sulfonpolymers (P2), bezogen auf das Gesamtgewicht von Blend (B), über 75 % und unter 95 % liegt.

11. Blend nach einem der vorhergehenden Ansprüche, **dadurch gekennzeichnet, dass** die jeweiligen Mengen von Polyimid (P1) und aromatischem Sulfonpolymer (P2) in einem Gewichtsverhältnis (P1)/(P2) von mehr als 1,5/1 und weniger als 15/1 vorliegen.

12. Blend nach einem der vorhergehenden Ansprüche, **dadurch gekennzeichnet, dass** das Gewicht des Polyimids (P3), bezogen auf das Gesamtgewicht der Polymere (P1), (P2) und (P3), mindestens 2 % und höchstens 23 % beträgt.

13. Verfahren zur Herstellung des Blends (B) nach einem der vorhergehenden Ansprüche, das Folgendes umfasst:
▪ einen Schritt des Trockenmischens eines aromatischen Sulfonpolymers (P2) mit einem Polyimid (P3);
▪ einen Schmelzemischschritt der wie oben gemischten Polymere mit separatem Zusatz des Polyamids (P1), alleine oder zusammen mit einem Verarbeitungshilfsmittel.

## Revendications

1. Mélange (B) comprenant :
• au moins un polyimide (P1), dans lequel plus de 50 % en poids des motifs récurrents (R1) comprennent au moins un cycle aromatique, au moins un groupe imide et 0 à 1 groupe éther (-O-) ;
• au moins un polymère de sulfone aromatique (P2) ;
• au moins un polyimide (P3), dans lequel plus de 50 % en poids des motifs récurrents (R3) comprennent au moins un cycle aromatique, au moins un groupe imide et au moins deux groupes éther (-O-).

2. Mélange selon la revendication 1, **caractérisé en ce que** le polyimide (P1) est un polyamide-imide aromatique.

3. Mélange selon la revendication 2, **caractérisé en ce que** le polyamide-imide aromatique comprend plus de 50 % en poids de motifs récurrents (R1b) qui comprennent au moins un cycle aromatique, au moins un groupe imide, tel quel et/ou sous sa forme d'acide amique, et au moins un groupe amide qui n'est pas inclus sous la forme d'acide amique d'un groupe imide, les motifs récurrents (R1b) étant : 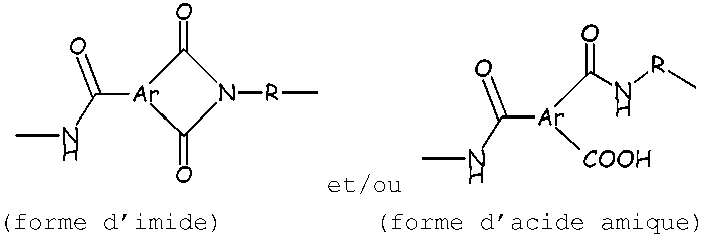 où :
- Ar est : 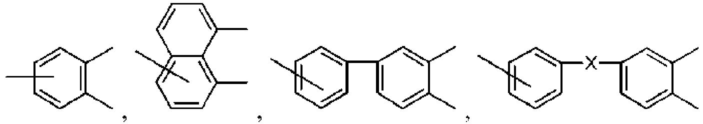 avec 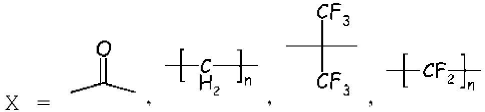 avec n = 1, 2, 3, 4 ou 5 ;
- R est : 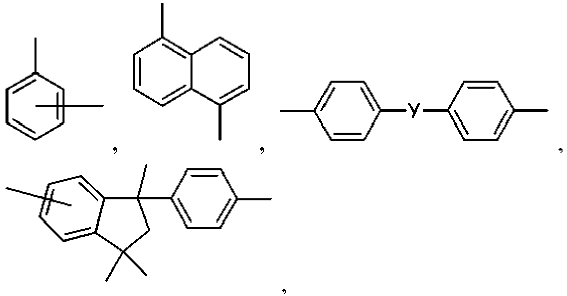 avec 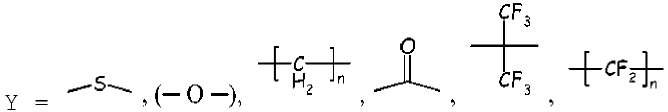 avec n = 0, 1, 2, 3, 4 ou 5.

4. Mélange selon l'une quelconque des revendications précédentes, **caractérisé en ce que** le polymère de sulfone aromatique (P2) comprend au moins 50 % en poids de motifs récurrents (R2a) et/ou motifs récurrents (R2b), lesdits motifs récurrents (R2a) étant choisis parmi : 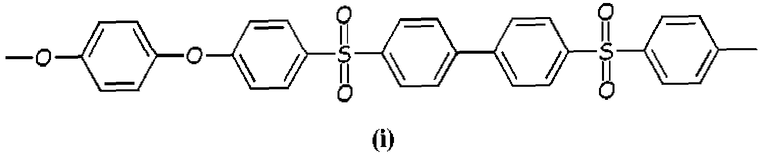 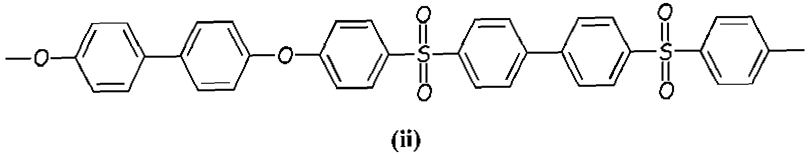 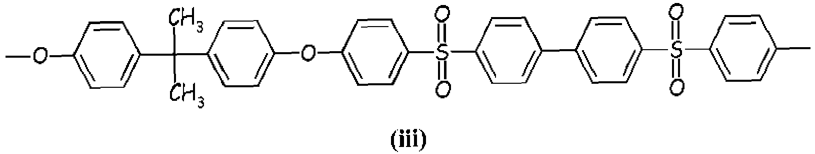 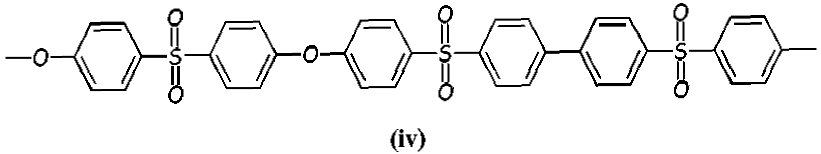 et des mélanges de ceux-ci et lesdits motifs récurrents (R2b) étant choisis parmi : 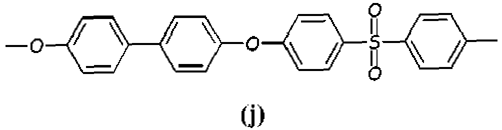 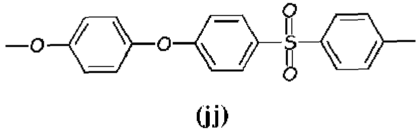 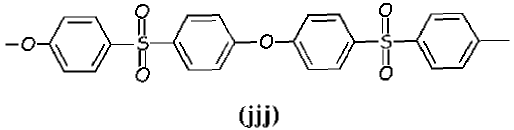 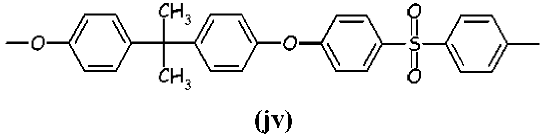 et des mélanges de ceux-ci.

5. Mélange selon la revendication 4, **caractérisé en ce que** le polymère de sulfone aromatique (P2) est une polyphénylsulfone, les motifs récurrents de ceux-ci étant des motifs (j) :

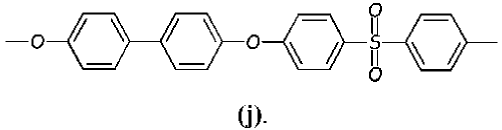

6. Mélange selon l'une quelconque des revendications précédentes, **caractérisé en ce que** le polyimide (P3) comprend plus de 50 % en poids de motifs récurrents (R3) contenant un cycle aromatique, au moins un groupe imide, tel quel et/ou sous sa forme d'acide amique, et au moins deux groupes éther, lesdits motifs récurrents (R3) étant choisis parmi : 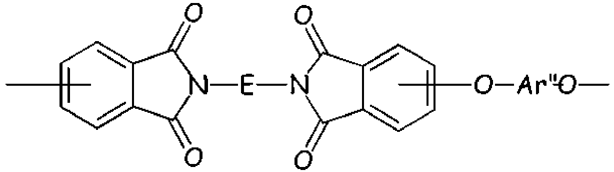 tels quels, et/ou sous leurs formes d'acide amique 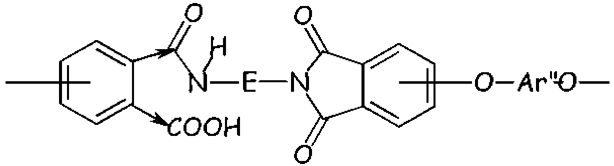 et/ou 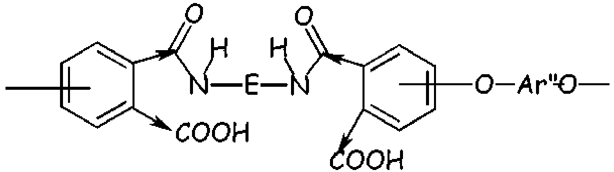 dans lequel :
• le → désigne une isomérie telle que, dans un motif récurrent quelconque, les groupes vers lesquels les flèches pointent peuvent exister comme décrit ou dans une position échangée ;
• E est choisi parmi :
(E-i) 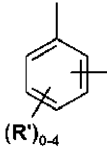 avec R' étant, indépendamment les uns des autres, des radicaux alkyle comprenant de 1 à 6 atomes de carbone, aryles ou halogènes ;
(E-ii) 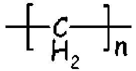 avec n = entier de 1 à 6 ;
(E-iii) 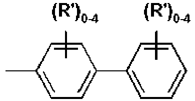 avec R' ayant la même définition que dans (E-i) ;
(E-iv) 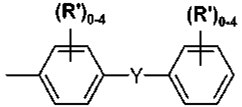 avec R' ayant la même définition que dans (E-i) ;
et Y étant choisi parmi :
(Y-i) alkylènes de 1 à 6 atomes de carbone, en particulier 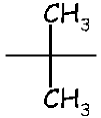 et 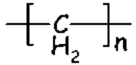 avec n = entier de 1 à 6,
(Y-ii) perfluoroalkylènes de 1 à 6 atomes de carbone, en particulier 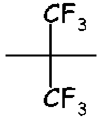 et 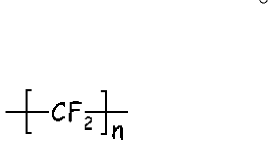 avec n = entier de 1 à 6,
(Y-iii) cycloalkylènes de 4 à 8 atomes de carbone ;
(Y-iv) alkylidènes de 1 à 6 atomes de carbone ;
(Y-v) cycloalkylidènes de 4 à 8 atomes de carbone ; 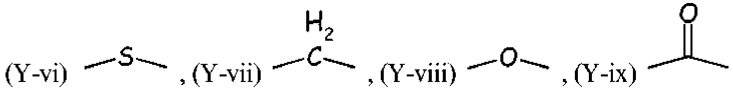
- Ar" est choisi parmi :
(Ar"-i) radicaux hydrocarbonés aromatiques ayant de 6 à 20 atomes de carbone et un dérivé substitué halogéné de ceux-ci, ou des dérivés substitués par alkyle de ceux-ci, dans lequel le groupe de substitution alkyle contient 1 à 6 atomes de carbone, tel que : 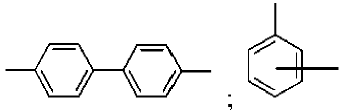 et un dérivé substitué halogéné de celui-ci, ou des dérivés substitués par alkyle de celui-ci, dans lequel le groupe de substitution alkyle contient 1 à 6 atomes de carbone ;
(Ar"-ii) 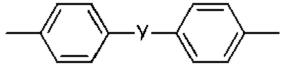 avec Y étant choisi parmi (Y-i), (Y-ii), (Y-iii), (Y-iv), (Y-v), (Y-vi), (Y-vii), (Y-viii) et (Y-ix), comme défini ci-dessus,
(Ar"-iii) radicaux alkylène et cycloalkylène ayant de 2 à 20 atomes de carbone, et
(Ar"-iv) polydiorganosiloxanes terminés.

7. Mélange selon la revendication 6, **caractérisé en ce que**, dans le polyétherimide aromatique (P3), les motifs récurrents de celui-ci sont des motifs récurrents : 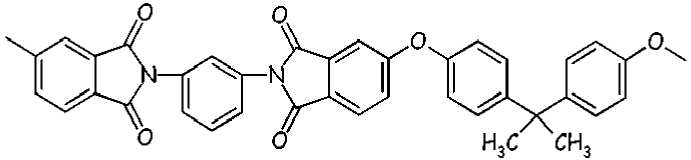 et/ou sous forme d'imide : 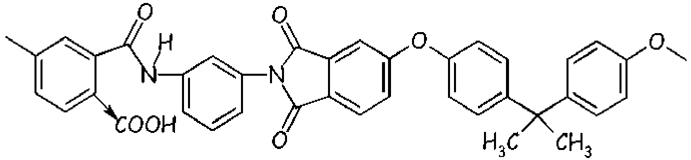 et/ou sous forme d'acide amique :

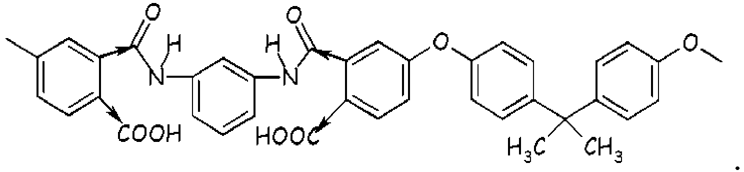

8. Mélange selon l'une quelconque des revendications précédentes, **caractérisé en ce que** le poids du polyimide (P1), sur la base du poids total de polymères (P1), (P2) et (P3), est au moins 40 % et au plus 95 %.

9. Mélange selon l'une quelconque des revendications précédentes, **caractérisé en ce que** le poids du polymère de sulfone aromatique (P2), sur la base du poids total des polymères (P1), (P2) et (P3), est au moins 5 % et au plus 40 %.

10. Mélange selon l'une quelconque des revendications précédentes, **caractérisé en ce qu'**il est essentiellement composé des polymères (P1), (P2) et (P3), le poids combiné du polyimide (P1) et du polymère de sulfone aromatique (P2), sur la base du poids total du mélange (B), étant supérieur à 75 % et inférieur à 95 %.

11. Mélange selon l'une quelconque des revendications précédentes, **caractérisé en ce que** les quantités respectives de polyimide (P1) et de polymère de sulfone aromatique (P2) sont dans un rapport en poids (P1)/(P2) supérieur à 1,5/1 et inférieur à 15/1.

12. Mélange selon l'une quelconque des revendications précédentes, **caractérisé en ce que**, sur la base du poids total des polymères (P1), (P2) et (P3), le poids du polyimide (P3) est au moins 2 % et au plus 23 %.

13. Procédé de préparation du mélange (B) selon l'une quelconque des revendications précédentes, qui comprend :
• une étape de mélange à sec d'un polymère de sulfone aromatique (P2) avec un polyimide (P3) ;
• une étape de mélange à l'état fondu des polymères mélangés comme décrit ci-dessus tandis qu'il est séparément ajouté à ceux-ci le polyimide (P1), seul ou conjointement avec un adjuvant de traitement.
